# EUROPEAN PATENT SPECIFICATION

(11) **EP 3 080 359 B1**
(45) Date of publication and mention of the grant of the patent: **30.08.2017**
(21) Application number: 13844579.6
(22) Date of filing: 13.12.2013
(51) Int. Cl.: B09B 5/00, B30B 15/00, B30B 15/34, B09B 3/00, B30B 9/12, F26B 9/08, C02F 103/32, E03C 1/266, B30B 9/14

(54) **AN IMPROVED APPARATUS FOR COMPACTING AND DEHYDRATING ORGANIC WASTE AND/OR ALIMENTARY WASTE**
VERBESSERTE VORRICHTUNG ZUM VERDICHTEN UND ENTWÄSSERN VON ORGANISCHEN ABFÄLLEN UND/ODER NAHRUNGSMITTELABFÄLLEN
APPAREIL AMÉLIORÉ POUR COMPACTER ET DÉSHYDRATER DES DÉCHETS ORGANIQUES ET/OU DES DÉCHETS ALIMENTAIRES

(43) Date of publication of application: 19.10.2016
(73) Proprietor: Techo SRL, 03013 Ferentino (FR) (IT)
(72) Inventor: CECCARELLI, Stefano, I-02100 Rieti (RI) (IT); IACOBUCCI, Lucio, I- 03100 Frosinone (FR) (IT)
(74) Representative: Iannone, Carlo Luigi
(86) International application number: PCT/IT2013/000350
(87) International publication number: WO 2015/087360

(56) References cited:
- WO-A1-2007/029272
- WO-A1-2010/106572
- GB-A- 2 464 281
- JP-A- H09 262 574
- JP-A- 2005 152 798
- KR-A- 20000 072 156
- US-A- 5 205 433
- US-A1- 2005 044 819

## Description

The present invention relates to the sector of electrical household appliances and in particular regards an apparatus, according to the preamble of the claim 1, designed to compact and dehydrate domestic organic waste and/or alimentary waste, for example to be installed directly underneath the drain column of the kitchen sink.

This does not on the other hand rule out its use in the commercial field.

Currently, the alimentary waste produced in the kitchen is thrown directly into refuse bags.

This entails a series of drawbacks.

A first drawback is represented by the fact that the aforesaid refuse bags are rapidly filled by domestic organic waste and a plurality of refuse bags are consequently generated, which evidently occupy a considerable space.

Consequently, neither operations for collecting the waste nor those for transporting the waste or storing it are facilitated.

Also known, from the international patent application No. WO2005/061134, is an apparatus for treating alimentary kitchen waste that is equipped with means for compacting and dehydrating waste, but this is a very complicated and somewhat cumbersome apparatus. Other devices identifying the relevant prior art relative to the claimed subject matter, are disclosed in the following documents: WO2010106572, JP2005152798, KR20000072156, JP409262574, GB2464281, WO2007029272, US20050044819,US5205433, IE20010337, EP1892132, US4523339. The Document WO2010106572 discloses all the features mentioned in the preamble of claim 1 and is selected as representing the closest prior art. The main purpose of the present invention is to overcome the above drawbacks and disadvantages of the prior art by providing an electrical household appliance for compacting and dehydrating organic waste that reduces its volume by approximately 80-90% and the liquids present in said waste by more than 60%, enabling in an effective way the user to be alerted when the waste-collecting-bag is full and therefore it has to be replaced. All this entails the reduction of the weight and of the volume of the waste, which, once dehydrated, drastically reduces the formation of percolate. The solution of the above mentioned technical problem is achieved by the device as described in claim 1. - A better understanding of the invention will be obtained from the ensuing detailed description and with reference to the attached drawings, which illustrate a preferred embodiment merely by way of example.

In the drawings:

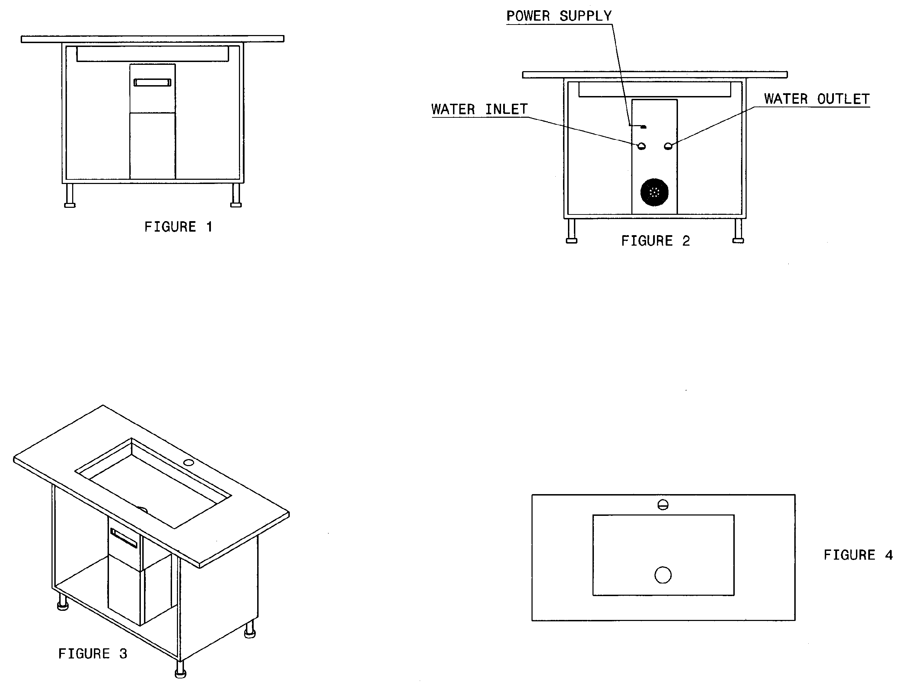

Figures 1-4 are schematic illustrations of an example of installation of the apparatus according to the present invention: visible in these figures is the hole of the drain column of the sink, which is located in the direction of the hole for loading the compacting apparatus;
Figure 5 shows schematically a preferred embodiment of the apparatus for compacting and dehydrating organic waste and/or alimentary waste forming the subject of the invention;

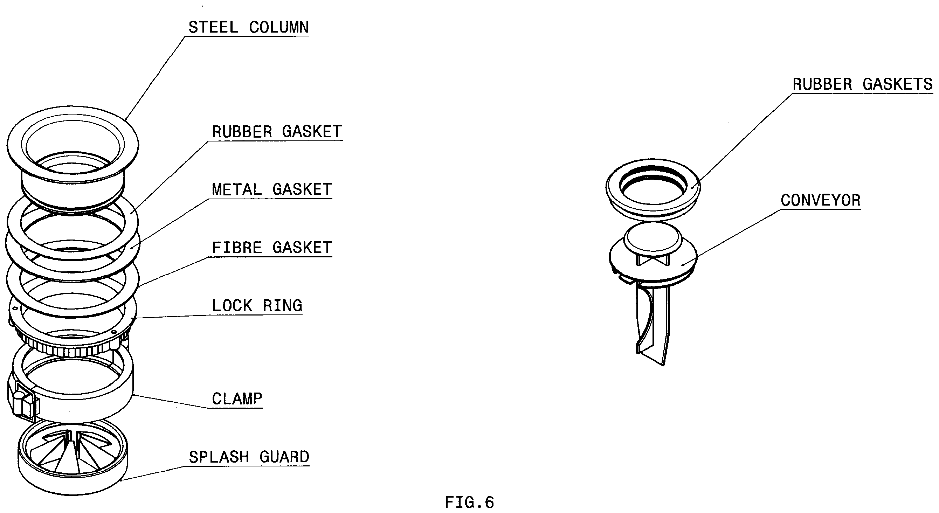

Figure 6 is an exploded view of the connection valve between the drain of the sink and the inlet duct of the apparatus described;
Figure 7 shows a longitudinal section of the apparatus of Figure 5, in which the compacted and dehydrated waste falls from the apparatus into the underlying bottom drawer;
Figure 8, which is similar to Figure 4, shows the internal parts of the invention, with the bottom drawer open;
Figures 9A, 9B, and 9C are a longitudinal sectional 3D view and a plan view of the tray for collecting liquids;
Figure 10 is a longitudinal section of the central body with the various components fixed to it;
Figure 11 shows a detail regarding the new support for the guides of the scrapers and/or pistons;
Figure 12, which is similar to Figure 10, is a longitudinal cutaway view that shows the auger with its axis and the scrapers mounted on the corresponding support;
Figures 13 and 14 are, respectively, an exploded 3D view and an assembled view of the refrigerating drawer;
Figures 15 and 16, which are substantially similar to Figure 8, show, respectively, the apparatus according to invention with installed thereon, on the inlet hole, an adjustable spacer for the drain. column and a slide valve;
Figure 17 is a 3D view of the central body alone;

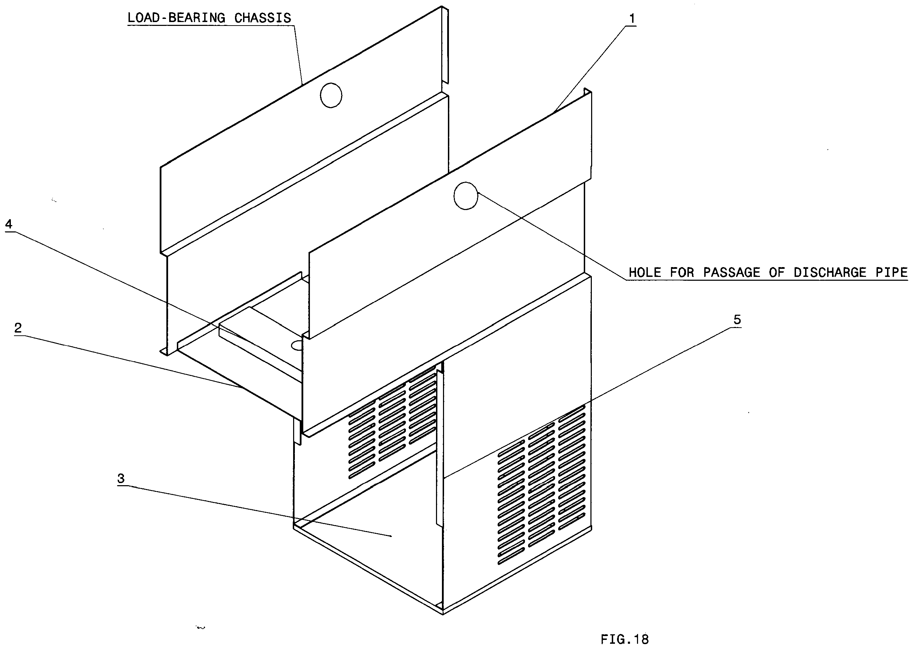

Figure 18 shows the load-bearing chassis of the apparatus;
Figure 19, which is similar to Figure 17, shows some constructional details;

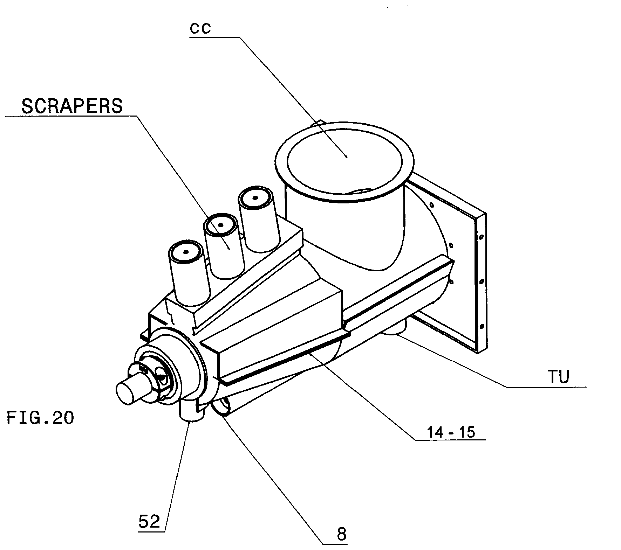

Figure 20 is a 3D view of the central body alone as a whole, complete with liquid-carrying tray;

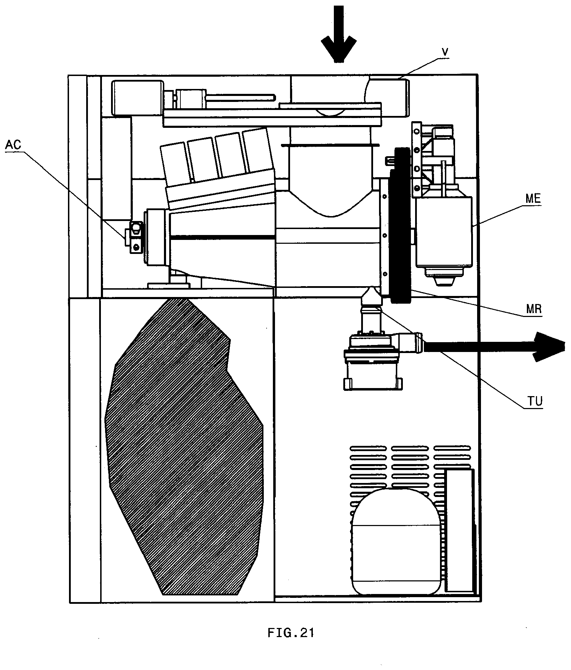

Figure 21 is a side view of the main internal parts of the apparatus;

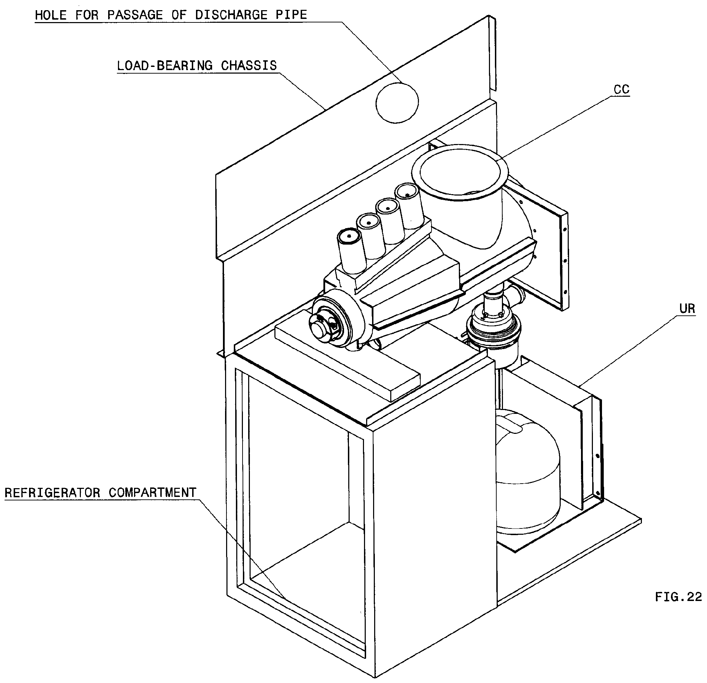

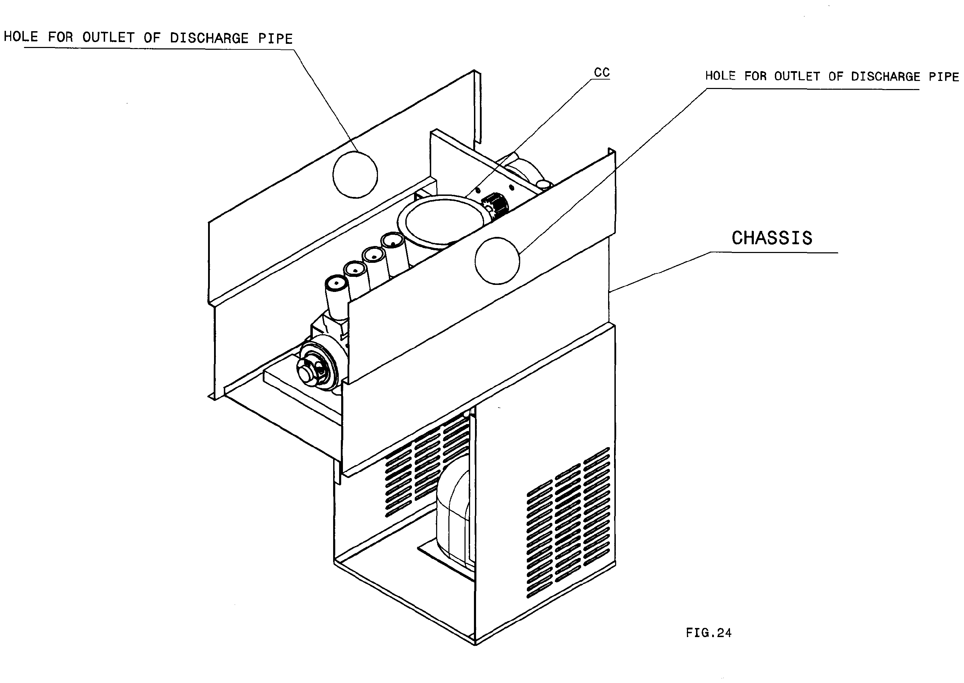

Figures 22, 23, and 24 are 3D views that illustrate the internal structural parts of the apparatus;
Figure 25 is a partially sectioned side view of a variant of the invention that may be used as stand-alone electrical household appliance instead of as under-sink apparatus; it also shows a different arrangement of the motor that drives the auger, on the side opposite to the one for introducing the material to be treated;
Figures 26 and 27 are enlarged details of Figure 25;
Figures 28 and 29 show the side bars, called "guides", for supporting the central body;
Figure 30 shows the detail regarding the slide valve on the inlet hole, during installation; this detail can advantageously be rotated through 90° to the right or to the left for directing discharge according to the installation requirements;
Figures 31A and 31B show passage of the water with the slide valve in the closed configuration, in order to prevent passage thereof into the apparatus;
Figures 32A and 32B show passage of the organic material and/or alimentary waste with the slide valve open, the waste entering the apparatus for being treated; and
Figures 33A and 33B show, respectively, a 3D view and a side view of the auger.

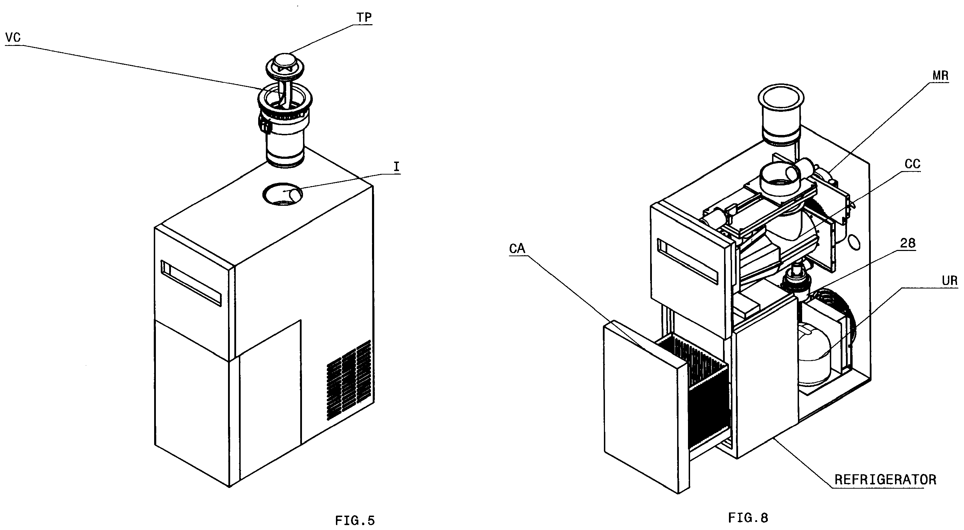

With reference to the figures, provided in the preferred embodiment described is an apparatus for compacting and dehydrating organic waste, comprising:
- an opening I (Figure 5) for loading/introducing the organic material and/or alimentary waste into the apparatus itself;
- mechanical means for compacting and dehydrating said organic material and/or alimentary waste, comprising a central compacting body CC, designed to separate the liquid fraction from the material to be treated;

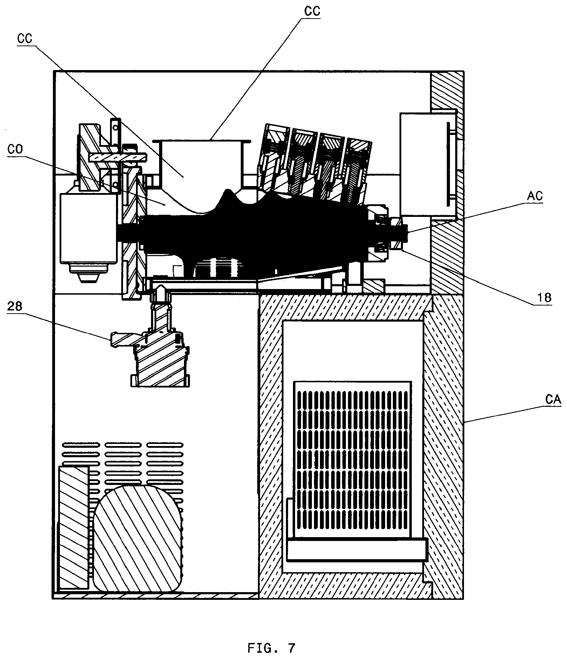

- means for collecting and discharging the liquid fraction coming from the treated material;
- a drawer CA, underlying the central compacting body CC (Figure 7), which collects the alimentary waste compacted and dehydrated via said central body CC and possibly the non-compactable waste that can be introduced manually directly into the drawer CA.

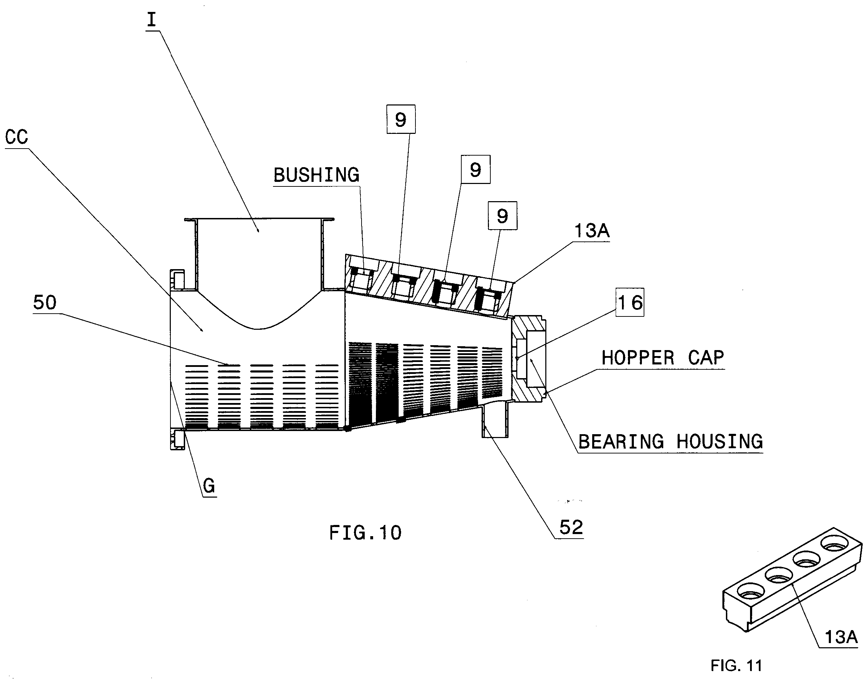

In the example described, said mechanical means are basically made up of an auger CO designed to feed and simultaneously compress and dehydrate the organic material introduced by the user into the aforesaid central body CC via the loading opening I connected to the drain of the sink. According to the invention, by compressing and dehydrating said organic material, said auger CO reduces the volume thereof so that the organic liquids contained therein come out via a plurality of self-cleaning slits 50 that are set longitudinally or else like spokes of a wheel in a clockwise direction or counterclockwise direction purposely arranged on the lateral surface of the outer casing of the auger CO (Figure 10): in this way, a first dehydration of the organic materials and/or alimentary waste is obtained, caused by them being "squeezed".

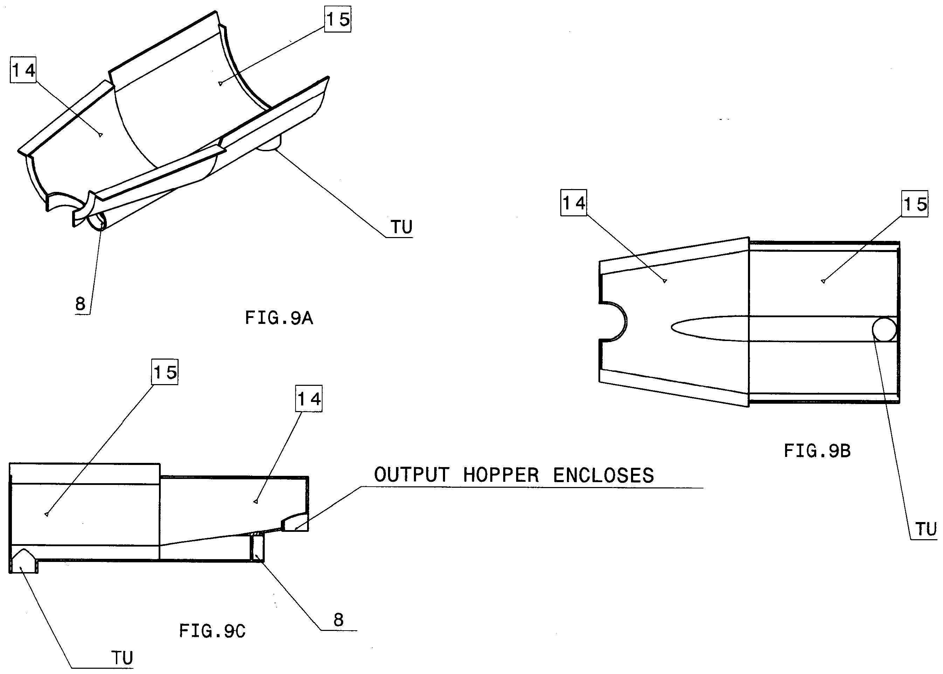

The central body CC comprises said means for collecting and discharging the liquid fraction coming from the treated material, and in particular:
- means (Figures 9A, 9B, and 9C) for collecting, by gravity, said organic liquids, said means being positioned underneath said auger CO;
- means for conveying said organic liquids to a pipe for discharge into the drains;
- a motor reducer (Figures 7 and 8) designed to be connected to the auger CO; and
- a hole for loading the material to be treated, located on the top part of the auger CO.

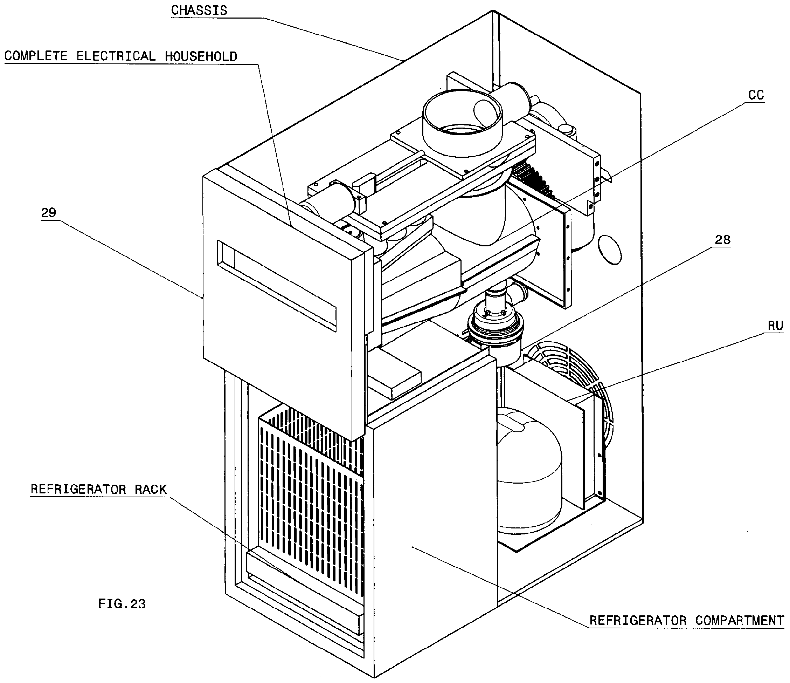

With reference to Figure 9, said means for collecting the organic liquids are constituted by a jacket defined by at least one collection tray with a frusto-conical front part 14 and a cylindrical rear part 15 (the latter also possibly being made up of two separate parts joined together in a known way), whilst the means for conveying said organic liquids into the drains are constituted by a purposely provided tube TU for outlet of liquids that is designed to be connected to an extraction pump 28 (Figures 8 and 23).

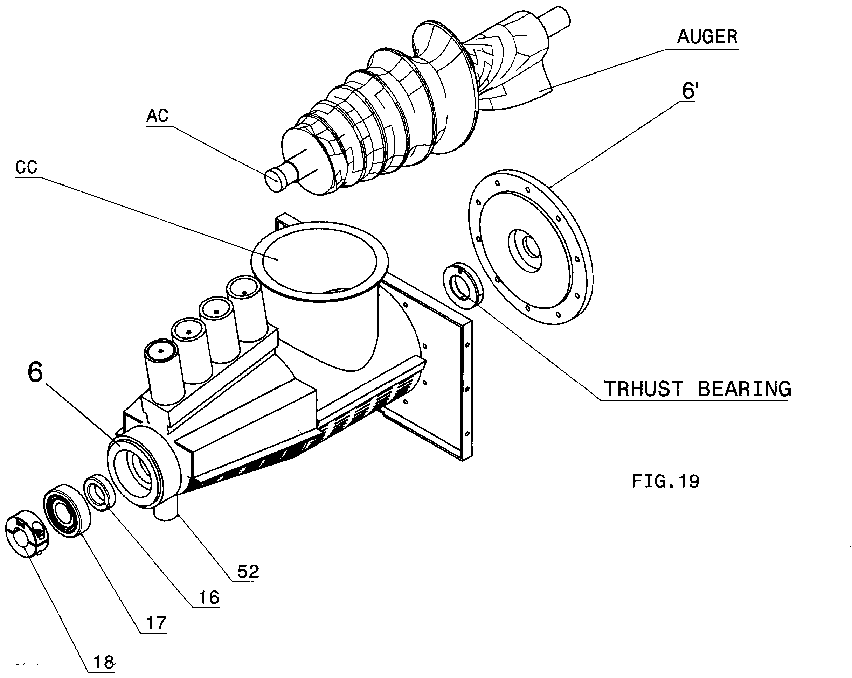

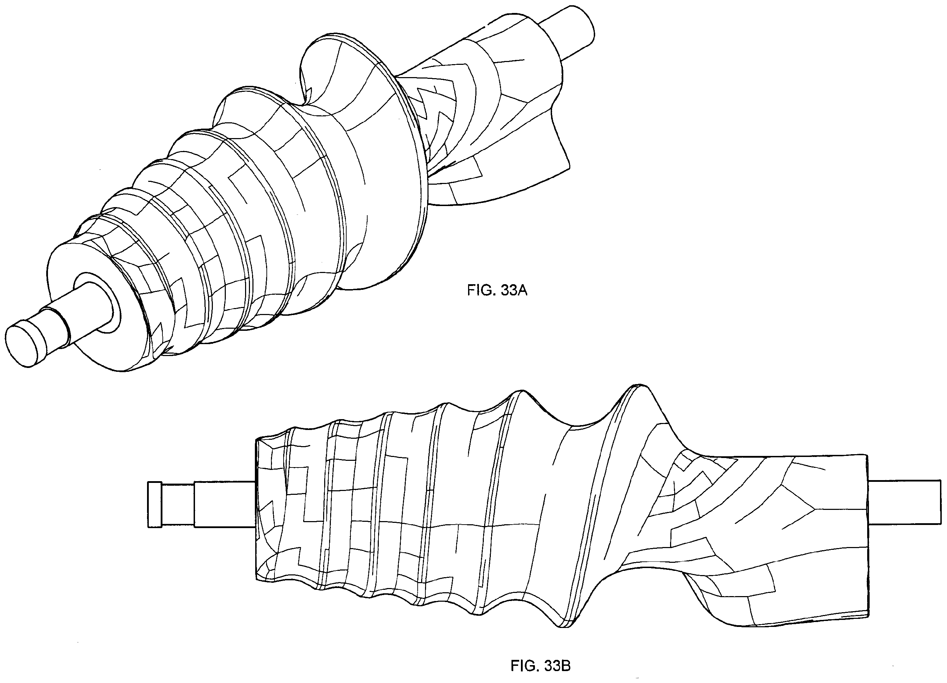

In the example illustrated (Figures 19 and 33A-33B), the auger CO is a variable-pitch auger and may also be provided with a multi-start screw.

According to a peculiar characteristic of the invention, the auger CO has a shape - from crest to crest - that is markedly concave, as may be seen in Figures 33A and 33B, in such a way as to enable the scraper pistons 10 to be accompanied upwards even when said auger CO changes direction of rotation in the event of clogging/jamming.

The auger CO is mounted on an internal shaft AC made of steel and has the external shape of a helix (Figures 7 and 33A and 33B), the height of which and the pitch of which decreases starting from the rear end, for entry of the material to be treated, to the front end, for exit of the treated material.

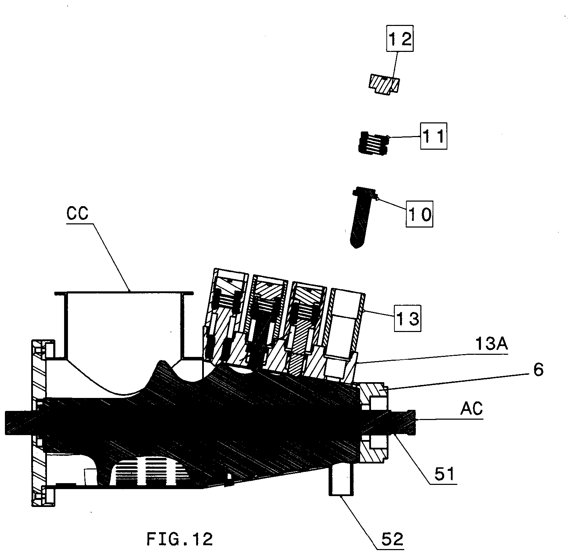

It should be noted that the auger CO is self-cleaning and for this purpose is equipped with one or more scraper pistons 10 housed in a cup-shaped liner 13 pushed towards the auger CO by purposely provided springs 11 blocked by corresponding threaded plugs 12 that are positioned coaxially to the respective springs (Figure 12). Said threaded plugs 12 are designed also to regulate the pre-loading of the spring.

It should be noted that the cup-shaped liners 13 function as guides for the scraper pistons 10, and for this purpose are firmly anchored on the conical front part of the central body CC, via a purposely provided support 13A.

The aforesaid scraper pistons 10 render the auger self-cleaning because they act directly in the cavities of the auger itself favouring conveying and advance of the material towards the outlet. This in fact enables complete emptying of the loading compartment and cleaning thereof. The upward movement of the pistons 10 is provided by the rotation of the auger CO itself, whereas their downward movement is provided by the return springs 11 housed in the cup 13 itself.

The above auger is housed in a frusto-conical casing (Figure 10), which, as already mentioned, is equipped with a plurality of self-cleaning slits 50 for enabling the liquids of the "squeezed" organic material to flow into the collection jacket constituted by the collection tray 14, 15 (Figures 9A, 9B, and 9C) .

The frusto-conical casing illustrated in Figure 10 has a large rear axial hole G, in which the auger CO is inserted, whilst said top hole I for introducing the material to be treated is set transversely with respect to the rear hole just described, once again in the substantially cylindrical rear part of the central body CC.

According to a preferred embodiment of the invention, the support 13A for the liners 13 for guiding the pistons 10, which is mounted fixedly on the conical front part of the central body CC, is set so that the pistons 10 are perpendicular to the conical surface and not perpendicular to the axis of the auger CO. Alternatively, the pistons 10 could be mounted so as to be perpendicular to the axis of the auger CO.

Another peculiar characteristic of the invention lies in the fact that provided at the free end of the conical front part of the central body CC is a hopper plug 6, which has a seat for an oil seal 16, a seat for a thrust bearing 17, as well as a central hole for passage of the shaft AC of the auger CO.

Advantageously, by gripping radially on the shaft AC of the auger a purposely provided locking element 18 that rests directly on the thrust bearing 17 it is obtained that said shaft AC - which is fixed to the auger CO - can turn freely with respect to the central body and at the same time be blocked axially in a pre-set position so that the auger CO cannot recede during the cycle of squeezing of the organic material to be treated.

The lock ring 18 is fixed on the shaft AC of the auger CO preferably thanks to a groove 51 impressed in the shaft itself of the auger, as may be seen in Figures 7 and 12.

Advantageously, in this way the axial thrust generated by the auger CO within the central body CC during treatment of the organic material and/or the alimentary waste discharges directly on the thrust bearing housed in the hopper plug 6 thanks to a locking system 18 (Figure 19) on the shaft AC of the auger itself. This advantageously enables the possibility of having a lighter and less cumbersome rear structure.

For cleaning the apparatus, a flushing cycle is envisaged, which is carried out in part during the squeezing cycle and completed at the end of the cycle.

Partial flushing is carried out in order to improve the squeezing cycle and for cleaning the tray for collecting liquids 14 and 15 (Figures 9A, 9B, and 9C) and the slits 50 (Figure 10). Flushing moreover facilitates exit of the liquids that are formed during squeezing by conveying them towards the rear discharge duct TU.

Present under the tray, connected downstream of the rear discharge duct TU, is an electric pump 28 that pushes the liquids into the drains.

Also envisaged is the possibility of carrying out one or more supplementary flushing cycles governed manually at the discretion of the user.

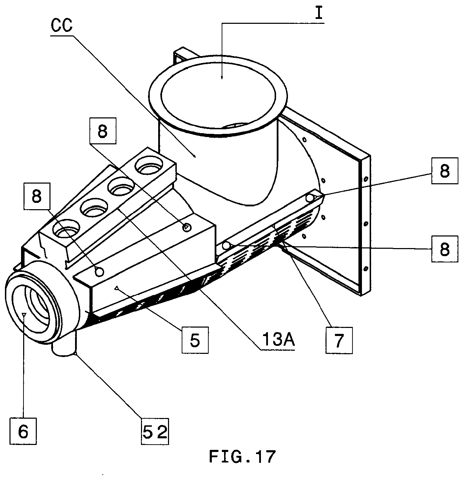

For this purpose, one or more spray nozzles 8 is provided (Figure 17), positioned in strategic points of the apparatus.

Operation of the nozzles is by means of purposely provided timed solenoid valves connected to the water mains or, in the absence of water pressure, by a purposely provided electric pump (not shown).

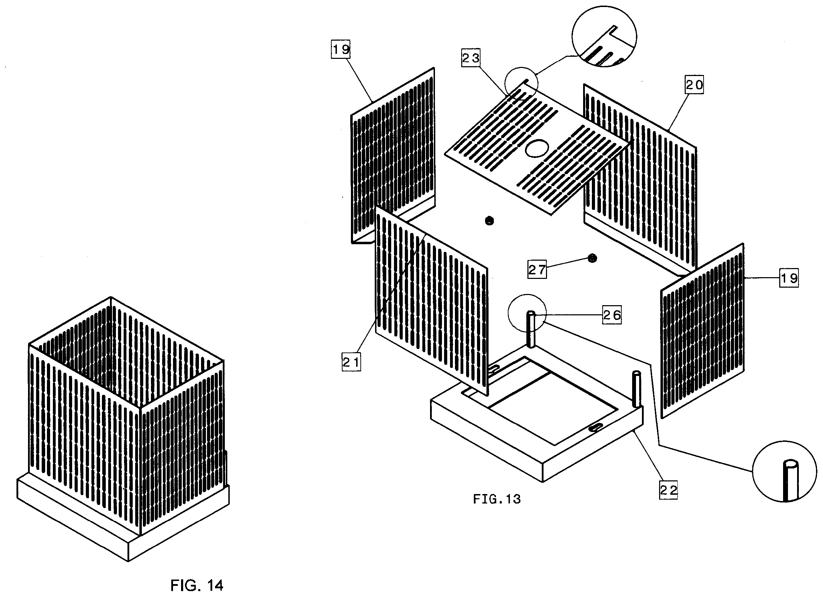

The drawer CA (Figures 7, 8, 13, and 14) is equipped with a structure designed to house a bag for collecting the compacted and dehydrated alimentary waste (compost) that falls by gravity from the front duct 52 of the central body CC.

The drawer CA is made up of a box-shaped load-bearing base 22, screwed to which are the slide guides 25, and of a rack equipped with perforated walls, which may be an enbloc element or else be constituted by two or four composable walls, side walls 19, a rear wall 20, and a front wall 21, to facilitate the cleaning operations.

Also the bottom 23 of the rack can be easily removed for possible cleaning and has two protuberances designed to co-operate with two supporting springs 26, fixed to the load-bearing base 22 of the drawer CA, so that said bottom will be oscillating and slightly inclined.

With the increase of the weight of the dehydrated waste, the above oscillating inclined bottom 23 tends to drop until, once a predetermined end-of-travel position has been reached, there is activation of a sensor that will signal the need to replace the collection bag.

In the proximity of the front end of the auger CO, scraping means are provided, preferably shaped for keeping the auger clean and for facilitating dropping of the compacted and dehydrated alimentary waste into the underlying bag.

In the example described, the aforesaid scraping means comprise at least one knife or scraper piston 10.

In addition, it is preferable for the drawer CA to be equipped with means for drawing in air and conveying it towards the outside.

Said means for drawing in and conveying air towards the outside are positioned in the rear part of the apparatus and comprise a dehumidification fan.

In order to improve ventilation and reduction in weight of the compost, said fan is set on a perforated wall.

It should also be envisaged that the air at outlet from of the apparatus is made to pass through an activated-carbon filter for eliminating any bad smells.

In the preferred embodiment described, the apparatus comprises means for refrigeration of the dehydrated waste designed to be fixed on the load-bearing structure.

With reference to Figure 8, said refrigeration means comprise, for example, a refrigeration unit UR with an evaporator housed within the compartment that houses the drawer CA.

The drawer CA is designed to be moved along its longitudinal axis for its entire length and may even be totally extractable.

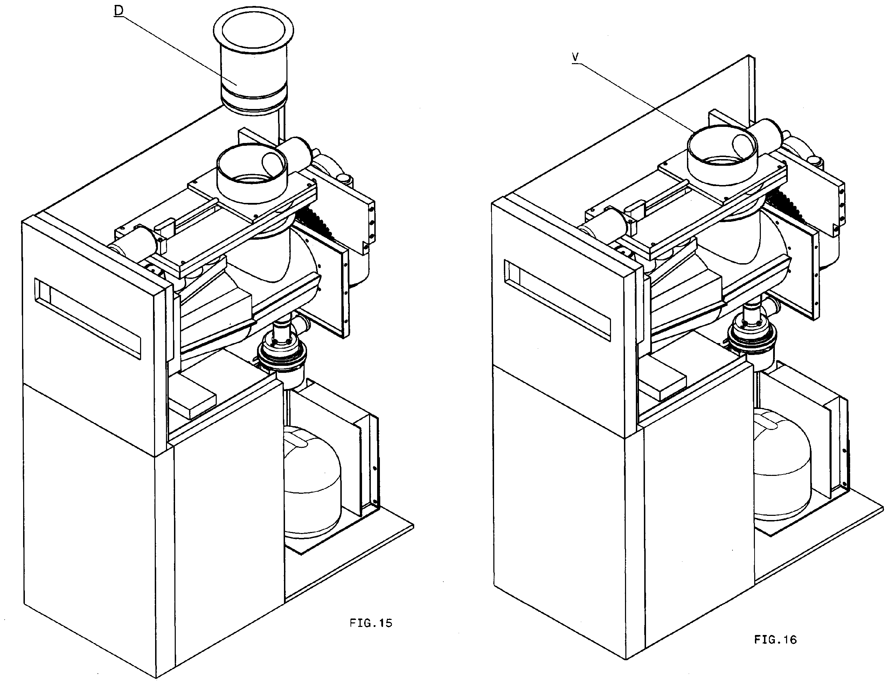

Figure 15 shows the apparatus according to the invention equipped with a telescopic spacer on the hole I for introducing the material to be treated, where said spacer enables installation of the apparatus to be facilitated, irrespective of the height of the drain hole of the sink with respect to the inlet hole I of the apparatus.

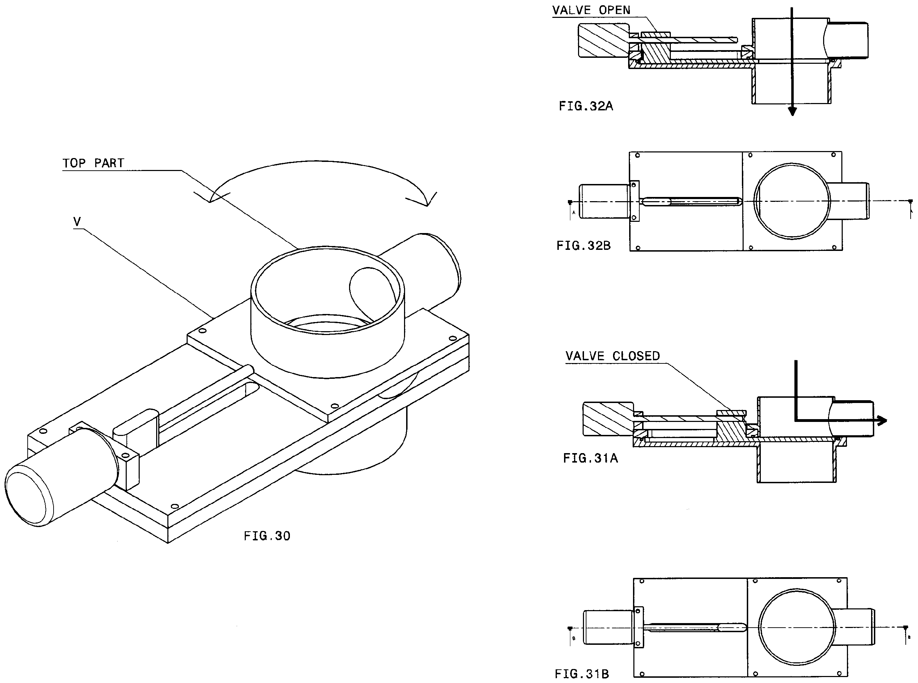

Figure 16 shows the apparatus according to the invention equipped with a slide valve V on the hole I for introducing the material to be treated. Said slide valve V as per Figures 30, 31A, 31B, 32A, 32B, advantageously enables by-passing of the apparatus in the case where the sink has to discharge only water and discharging of the sink into the apparatus only when organic waste and/or alimentary waste has to be discharged, thus avoiding the need for the discharge pump 28 to be activated whenever the sink is to be emptied.

Operation of the slide valve V may be electrical or manual.

As is illustrated clearly in Figures 30, 31A, 31B, 32A, 32B referred to above, the valve V has a lateral discharge outlet above the sliding portion of the valve, which has the purpose of enabling direct off-flow of the liquids directly from the discharge hole of the sink into the drains.

The apparatus comprises a mechanism for detecting jamming of the auger based upon the measurement of current absorption, said mechanism being associated to the motor reducer in order to detect rotation thereof.

When the auger gets jammed, current absorption in turn changes considerably and consequently, thanks to a purposely provided electronic card, which controls the entire apparatus, supply of the motor reducer is interrupted. It is possible to unjam said auger automatically via the electronic control card, which, having detected jamming of the auger, acts on the rotation of the motor reducer by reversing the direction of rotation itself for a pre-set time, after which it interrupts supply to the motor reducer itself to enable technical intervention to solve the problem.

According to the invention, the apparatus is also equipped with a light and/or acoustic warning device designed to warn the user that the auger is jammed and that it is necessary to remove the object that has caused jamming of the auger itself.

Said light and/or acoustic warning system is activated by the electronic control card.

The means designed to drive the apparatus described comprise an electrical system, as well as pushbuttons, warning lights, and acoustic warning devices, which are preferably set on the outer front wall of the electrical household appliance:
- a main ON/OFF switch;
- a switch for start of the compacting and dehydrating cycle;
- a switch for start of the supplementary flushing cycle;
- green/red warning light of the refrigerating unit;
- service warning light;
- "drawer full" warning light.

It should be noted that, as an alternative to the ON/OFF switch and to the service warning light, it is possible to provide an ON/OFF switch with the service warning light integrated therein.

In the example described, said pushbuttons and/or switches and/or warning lights and/or warning devices are located on a control panel on the front wall of the apparatus, but said control panel may be positioned also at a distance so as to enable convenient activation of the apparatus without having to open the door of the kitchen-sink cabinet.

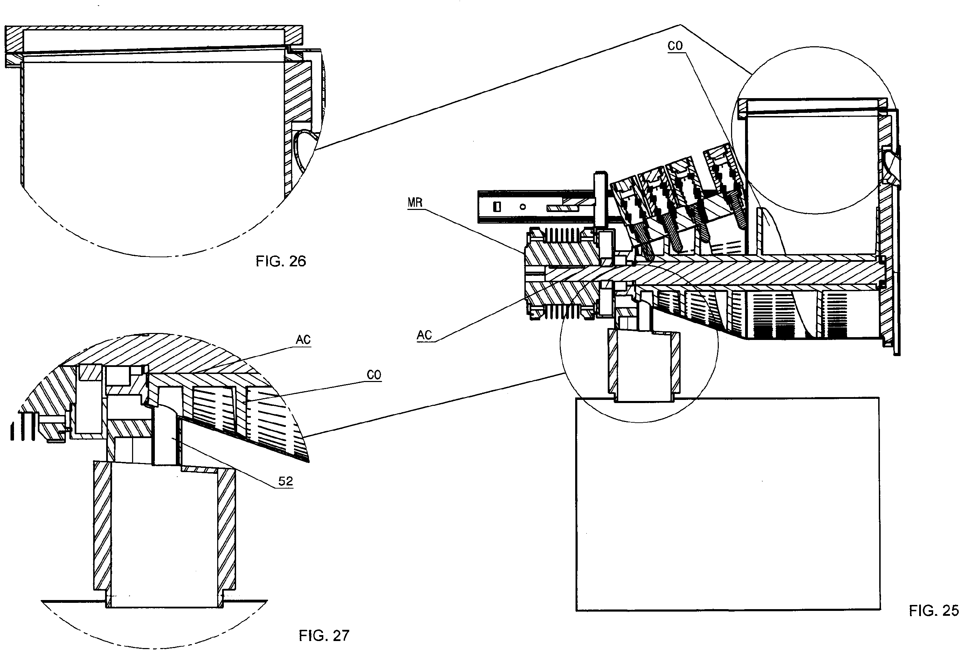

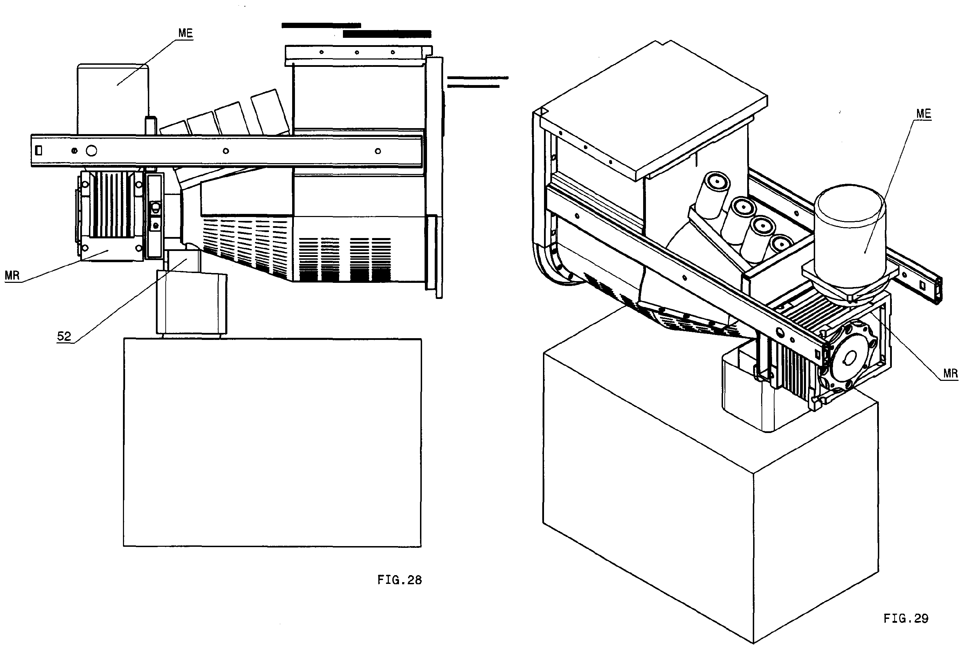

A variant of the invention, illustrated in Figures 25 to 29, may be used as stand-alone electrical household appliance, which does not need to be installed under the sink where the drain pipe is present, but is installed separately and for this purpose is equipped with a fixed lid that covers the opening I when the apparatus is in the closed configuration for use. In this variant, the apparatus is opened (i.e., displaced along the lateral guides of the load-bearing chassis) only for introducing the organic material and/or the alimentary waste to be treated. Illustrated in the figures just referred to is a different position of the motor reducer MR that moves the auger CO, which is located on the front side of the auger, i.e., the one opposite to that for inlet of the material to be treated. According to the invention, the position of the motor reducer MR and of the corresponding motor ME may indifferently be the one just described or else the one on the opposite side of the auger, as in the foregoing figures regarding the version positioned under the sink.

The present invention has been described and illustrated according to a preferred embodiment and a variant, but it is understood that equivalent modifications and/or replacements may be made by any person skilled in the branch, without thereby departing from the scope of the appended claims.

## Claims

1. An apparatus for compacting and dehydrating organic waste and/or alimentary waste, comprising:
- an opening (I) for loading/introducing the organic material and/or the alimentary waste into the apparatus itself;
- mechanical means for compacting and dehydrating said organic material and/or alimentary waste, comprising a central compacting body (CC), designed to separate the material to be treated from the liquid fraction contained therein, said mechanical means for compacting and dehydrating said organic material and/or alimentary waste comprising an auger (CO) designed to feed and simultaneously compress and dehydrate the organic material introduced by the user into said central body (CC) via said loading opening (I), said compression occurring by the mechanical action of the auger (CO), and organic liquids separated come out via a plurality of holes (50), that are set longitudinally or radially according to a clockwise direction or counterclockwise direction purposely provided on the lateral surface of the outer casing of the auger (CO);
- means for collecting and discharging the liquid fraction coming from the treated material, including: means (14-15) for collecting, by gravity, said organic liquids, said means being positioned underneath said auger (CO); means (TU) for conveying said organic liquids to a pipe for discharge into the drains; a motor reducer (MR) designed to be connected to the auger (CO); said opening (I) for loading the material to be treated being located on the top part of the auger (CO);
- a drawer (CA), set underneath said central compacting body (CC), for collecting the alimentary waste compacted and dehydrated via said central body (CC) and for receiving, by manual introduction, the non-compactable waste, said apparatus being **characterised in that**
- the holes provided on the surface of the outer casing of the auger are in the shape of slits; said apparatus furthermore comprises:
- a telescopic spacer (D), provided on said opening (I), to facilitate installation of said apparatus, irrespective of the height of the drain hole of a sink with respect to said opening (I) of said apparatus; and
- a slide valve (V), provided on said opening (I) and comprising a sliding portion, for by-passing said apparatus in the case where said sink has to discharge only water and for enabling discharge of said sink into said apparatus only when organic waste and/or alimentary waste to be treated has to be discharged;
the drawer (CA) is equipped with a structure designed to house a bag for collecting the compacted and dehydrated alimentary waste (compost) that drops by gravity from a front duct (52) of the central body (CC);
wherein the drawer (CA) is made up of a box-shaped load-bearing base (22), screwed to which are the slide guides (25) and a rack provided with perforated walls, wherein the rack has a bottom (23) that can be easily removed for possible cleaning, and two protuberances designed to co-operate with two supporting springs (26), fixed to the load-bering base (22) of the drawer (CA) so that said bottom will be oscillating and slightly inclined, where, with the increase in weight of the dehydrated waste, said oscillating inclined bottom (23) tends to drop until, once a predetermined end-of-travel position has been reached, it activates a sensor that will indicate the need to replace the collection bag.

2. The apparatus according to Claim 1, **characterized in that** said means for collecting the organic liquids are constituted by a jacket defined by at least one collection tray with a frusto-conical front part (14) and a cylindrical rear part (15), whilst said means for conveying said organic liquids into the drains are constituted by a purposely provided tube (TU) for outlet of liquids that is designed to be connected to an extraction pump (28).

3. The apparatus according to any one of the preceding claims, **characterized in that** the rack provided with perforated walls may be an enbloc element or else be constituted by two or four composable walls, namely, side walls (19), a rear wall (20), and a front wall (21), to facilitate cleaning operations.

4. The apparatus according to any one of the preceding claims, **characterized in that** said slide valve (V) has a lateral discharge outlet above the sliding portion of said valve (V), which has the purpose of enabling direct off-flow of the liquids directly from the discharge hole of said sink into the drains.

5. The apparatus according to any one of the preceding claims, **characterized in that** the auger (CO) is a variable-pitch auger and/or is made with a multi-start screw, or else **in that** the auger (CO) has a helical outer shape, the height of which and the pitch of which diminish from the rear end, for entry of the material to be treated, to the front end, for exit of the treated material.

6. The apparatus according to any one of Claims 1 and 2, **characterized in that** the auger (CO) has a shape - from crest to crest - that is concave in such a way as to enable scraper pistons (10) to be accompanied upwards even when said auger (CO) changes direction of rotation in the event of clogging/jamming.

7. The apparatus according to any one of the preceding claims, **characterized in that** the auger (CO) is self-cleaning and for this purpose is equipped with one or more scraper pistons (10) housed in a respective cup-shaped liner (13), which are pushed towards the auger (CO) by purposely provided springs (11) blocked by corresponding threaded plugs (12) that are positioned coaxially to the respective springs; said threaded plugs (12) being also designed to adjust the pre-load of the respective spring; wherein the cup-shaped liners (13) function as guide for the scraper pistons (10), and for said purpose are firmly anchored on the conical front part of the central body (CC), via a purposely provided support (13A).

8. The apparatus according to Claim 7, **characterized in that** the movement of rising of the pistons (10) is transferred thereto by the rotation of the auger (CO) itself, whereas the movement of descent is transferred thereto by the return springs (11) housed in the respective cup (13).

9. The apparatus according to Claim 1, **characterized in that** said auger is housed in a frusto-conical casing equipped with a plurality of self-cleaning slits (50) for enabling the liquids of the "squeezed" organic material to flow into the collection jacket constituted by the collection tray (14-15), wherein said frusto-conical casing has a large axial rear hole (G), in which the auger (CO) is inserted, whilst said top opening
(I) for introducing the material to be treated is set perpendicular to the said rear hole, once again in the substantially cylindrical rear part of the central body (CC) .

10. The apparatus according to Claim 7, **characterized in that** the support (13A) for the liners (13) for guiding the pistons (10), which is mounted fixedly on the conical front part of the central body (CC), is set so that the pistons (10) are perpendicular to the conical surface and not perpendicular to the axis of the auger (CO), or else said support (13A) is set so that the pistons (10) are perpendicular to the axis of the auger (CO).

11. The apparatus according to any one of the preceding claims, **characterized in that** it further comprises a thrust bearing (17) and a locking element (18), and **in that**, at the free end of the front part of the central body (CC) there is a hopper plug (6), which has a seat for an oil seal (16), a seat for said thrust bearing (17), as well as a central hole for passage of a shaft (AC) of the auger (CO); thus obtaining that, by gripping radially on the shaft (AC) of the auger on said locking element (18) resting directly on the thrust bearing (17), said shaft (AC) - which is fixed to the auger (CO) - can turn freely with respect to the central body (CC) and at the same time is blocked axially in a pre-set position, so that the auger (CO) cannot recede during the cycle of squeezing of the organic material to be treated; wherein the locking element (18) is fixed on the shaft (AC) of the auger (CO) by means of an annular groove (51) provided in the shaft itself of the auger; thus obtaining that the axial thrust generated by the auger (CO) within the central body (CC) during treatment of the organic material and/or the alimentary waste is discharged directly on the thrust bearing housed in the hopper plug (6) thanks to said lock ring (18) on the shaft (AC) of the auger itself.

12. The apparatus according to an one of the preceding claims, **characterized in that** it comprises means for refrigeration of the treated material, which in turn comprise a refrigeration unit (UR) with an evaporator housed within the compartment that houses the drawer (CA); the latter being designed to be moved along its longitudinal axis for its entire length or being totally extractable.

13. The apparatus according to Claim 1, **characterized in that** it comprises a mechanism for detecting jamming of the auger (CO) based upon the measurement of the absorption current, said mechanism being associated to the motor reducer (MR) for detecting rotation thereof: when the auger is jammed, current absorption in turn changes considerably and consequently, thanks to a purposely provided electronic card, which controls the entire apparatus, supply of the motor reducer is interrupted; it being possible to unjam said auger (CO) automatically via the electronic control card, which, having detected jamming of the auger, acts on the rotation of the motor reducer by reversing the direction of rotation for a pre-set time, after which it interrupts supply to the motor reducer itself to enable technical intervention for solving the problem; wherein a warning light and/or acoustic warning device is provided, activated by the electronic control card, designed to warn the user that the auger is blocked and that it is necessary to remove the object that has caused jamming of the auger itself.

14. The apparatus according to any one of the preceding claims, **characterized in that** the means designed to drive the apparatus comprise an electric wiring system, as well as pushbuttons, warning lights, and acoustic warning devices that are set preferably on the outer front wall of the electrical household appliance, among which:
- a main ON/OFF switch;
- a switch for start of the compacting and dehydrating cycle;
- a switch for start of the supplementary flushing cycle;
- green/red warning light of the refrigerating unit;
- "service" warning light;
- "drawer full" warning light.

15. The apparatus according to Claim 14, **characterized in that** said pushbuttons and/or switches and/or warning lights and/or acoustic warning devices are located on a control panel set at a distance so as to enable convenient activation of the apparatus without having to open the door of the kitchen-sink cabinet.

16. The apparatus according to any one of the preceding claims, **characterized in that** provided on the opening (I) for introducing material is a fixed lid that covers the opening (I) itself when the apparatus is in the closed configuration for use; said apparatus being opened, i.e., displaced along the lateral guides of the load-bearing chassis, only for introducing the organic material and/or the alimentary waste to be treated.

## Patentansprüche

1. Eine Vorrichtung zum Verdichten und Entwässern von organischen Abfällen und/oder Nahrungsmittelabfällen, umfassend:
- eine Öffnung (I) zum Laden/Einführen des organischen Materials und/oder der Nahrungsmittelabfälle in die Vorrichtung selbst;
- mechanische Mittel zum Verdichten und Entwässern des organischen Materials und/oder der Nahrungsmittelabfälle, die einen mittigen Verdichtungskörper (CC) umfassen, der konzipiert ist, das zu behandelnde Material vom darin enthaltenen flüssigen Teil zu trennen, wobei das mechanische Mittel zum Verdichten und Entwässern des organischen Materials und/oder der Nahrungsmittelabfälle eine Einzugsschnecke (CO) umfasst, die konzipiert ist, das organische Material, das vom Benutzer in den mittigen Körper (CC) über die Ladeöffnung (I) eingeführt wurde, gleichzeitig zu verdichten und zu entwässern, wobei sich die Verdichtung durch die mechanische Wirkung der Einzugsschnecke (CO) ereignet, und die getrennten organischen Flüssigkeiten über eine Vielzahl von Löchern (50) herauskommen, die longitudinal oder radial gemäß einer Richtung im Uhrzeigersinn oder Gegenuhrzeigersinn gesetzt sind, die zweckentsprechend auf der lateralen Oberfläche des äußeren Gehäuses der Einzugsschnecke (CO) bereitgestellt sind;
- Mittel zum Sammeln und Entleeren des flüssigen Teils, der vom behandelten Materials kommt, die einschließen: Mittel (14-15) zum Sammeln, durch Schwerkraft, der organischen Flüssigkeiten, wobei die Mittel unterhalb der Einzugsschnecke (CO) positioniert sind; Mittel (TU) zum Transportieren der organischen Flüssigkeiten zu einem Rohr zur Entleerung in die Abläufe; eine Motoruntersetzung (MR), die konzipiert ist, an die Einzugsschnecke (CO) angeschlossen zu werden; wobei sich die Öffnung (I) zum Laden des zu behandelnden Materials auf dem oberen Teil der Einzugsschnecke (CO) befindet;
- eine Schublade (CA), die unterhalb des mittigen Verdichtungskörpers (CC) gesetzt ist, zum Sammeln der Nahrungsmittelabfälle, die über den mittigen Körper (CC) verdichtet und entwässert wurden, und zur Aufnahme, durch manuelle Einführung, der nicht verdichtbaren Abfälle, wobei die Vorrichtung **dadurch gekennzeichnet ist, dass**
- die auf der Oberfläche des äußeren Gehäuses der Einzugsschnecke bereitgestellten Löcher in Form von Schlitzen sind; wobei die Vorrichtung überdies umfasst:
- einen teleskopischen Abstandshalter (D), der an der Öffnung (I) bereitgestellt ist, zum Erleichtern des Einbaus der Vorrichtung, ungeachtet der Höhe des Abflusslochs eines Spülbeckens in Bezug auf die Öffnung (I) der Vorrichtung; und
- ein Schieberventil (V), das an der Öffnung (I) vorgesehen ist und einen Schiebeteil umfasst, um die Vorrichtung in dem Falle zu umgehen, in dem das Spülbecken nur Wasser entleeren muss und um ein Entleeren des Spülbeckens in die Vorrichtung nur zu ermöglichen, wenn zu behandelnde organische Abfälle und/oder Nahrungsmittelabfälle entleert werden müssen; die Schublade (CA) ist mit einer Struktur ausgerüstet, die konzipiert ist, einen Beutel zum Sammeln der verdichteten und entwässerten Nahrungsmittelabfälle (Kompost) unterzubringen, die durch Schwerkraft aus einem vorderen Rohr (52) des mittigen Körpers (CC) fallen;
wobei die Schublade (CA) von einer kastenförmigen tragenden Basis (22) gebildet ist, an welche die Gleitführungen (25) und ein mit perforierten Wänden versehenes Gestell angeschraubt sind,
wobei das Gestell einen Boden (23), der sich zur möglichen Reinigung leicht entfernen lässt, und zwei Vorsprünge aufweist, die konzipiert sind, mit zwei stützenden Federn (26) zu kooperieren, die an der tragenden Basis (22) der Schublade (CA) derartig befestigt sind, dass der Boden vibrieren und leicht geneigt sein wird, wobei, mit der Gewichtszunahme der entwässerten Abfälle, der vibrierende, geneigte Boden (23) tendiert sich zu senken bis, sobald eine vorbestimmte Endlage erreicht worden ist, er einen Sensor aktiviert, der die Notwendigkeit zum Austauschen des Sammelbeutels anzeigen wird.

2. Die Vorrichtung nach Anspruch 1, **dadurch gekennzeichnet, dass** Mittel zum Sammeln der organischen Flüssigkeiten durch eine Ummantelung konstituiert sind, die durch mindestens ein Sammelblech mit einem kegelstumpfförmigen Vorderteil (14) und einen zylindrischen hinteren Teil (15) definiert ist, während das Mittel zum Transportieren der organischen Flüssigkeiten in die Entwässerung durch ein zweckdienlich bereitgestelltes Rohr (TU) zum Ausfluss von Flüssigkeiten konstituiert ist, das konzipiert ist, an eine Extraktionspumpe (28) angeschlossen zu werden.

3. Die Vorrichtung nach einem der vorhergehenden Ansprüche, **dadurch gekennzeichnet, dass** das mit perforierten Wänden versehene Gestell ein Blockelement sein könnte oder anderweitig durch zwei oder vier zusammensetzbare Wände konstituiert sein könnte, nämlich, Seitenwände (19), eine Rückwand (20) und eine Vorderwand (21), um Reinigungsvorgänge zu erleichtern.

4. Die Vorrichtung nach einem der vorhergehenden Ansprüche, **dadurch gekennzeichnet, dass** das Schieberventil (V) eine laterale Abflussöffnung oberhalb des gleitenden Teils des Ventils (V) aufweist, die den Zweck hat direkten Abfluss der Flüssigkeiten direkt aus dem Abflussloch des Spülbeckens in die Entwässerung zu ermöglichen.

5. Die Vorrichtung nach einem der vorhergehenden Ansprüche, **dadurch gekennzeichnet, dass** die Einzugsschnecke (CO) eine Verstell-Einzugsschnecke ist und/oder mit einer mehrgängigen Schnecke hergestellt ist, oder aber, dass die Einzugsschnecke (CO) eine spiralförmige äußere Form hat, deren Höhe und deren Teilung ab dem hinteren Ende, für den Eintritt des zu behandelnden Materials, zum vorderen Ende, für den Austritt des behandelten Materials, abnimmt.

6. Die Vorrichtung nach einem der Ansprüche 1 und 2, **dadurch gekennzeichnet, dass** die Einzugsschnecke (CO) eine Form - von Spitze zu Spitze - aufweist, die konkav ist, derartig, dass den Schaberkolben (10) ermöglicht wird, nach oben begleitet zu werden, selbst wenn die Einzugsschnecke (CO) ihre Drehrichtung im Falle von Verstopfung/Klemmen ändert.

7. Die Vorrichtung nach einem der vorhergehenden Ansprüche, **dadurch gekennzeichnet, dass** die Einzugsschnecke (CO) selbstreinigend ist und zu diesem Zweck mit einem oder mehreren Schaberkolben (10) ausgerüstet ist, die in einer jeweiligen tassenförmigen Laufbuchse (13) untergebracht sind, die von zweckdienlich vorgesehenen Federn (11) in Richtung der Einzugsschnecke (CO) geschoben werden, die von entsprechenden mit Gewinde versehenes Stopfen (12) blockiert werden, die koaxial zu den jeweiligen Federn positioniert sind; wobei die mit Gewinde versehenen Stopfen (12) außerdem konzipiert sind, die Vorbelastung der jeweiligen Feder einzustellen; wobei die tassenförmigen Laufbuchsen (13) als eine Führung für die Schaberkolben (10) fungieren, und für diesen Zweck auf dem konischen Vorderteil des mittigen Körpers (CC), über zweckdienlich vorgesehene Abstützung (13A), fest verankert sind.

8. Die Vorrichtung nach Anspruch 7, **dadurch gekennzeichnet, dass** die Aufwärtsbewegung der Kolben (10) durch die Drehung der Einzugsschnecke (CO) selbst darauf transferiert wird, wogegen die Abwärtsbewegung von den Rückstellfedern (11), die in der jeweiligen Tasse (13) untergebracht sind, darauf transferiert wird.

9. Die Vorrichtung nach Anspruch 1, **dadurch gekennzeichnet, dass** die Einzugsschnecke in einem kegelstumpfförmigen Gehäuse untergebracht ist, das mit einer Vielzahl von selbstreinigenden Schlitzen (50) versehen ist, um den Flüssigkeiten des "gequetschten" organischen Materials zu ermöglichen, in die Sammel-Ummantelung zu fließen, die durch das Sammelblech (14-15) konstituiert ist, wobei das kegelstumpfförmige Gehäuse ein großes axiales hinteres Loch (G) aufweist, in das die Einzugsschnecke (CO) eingefügt wird, während die obere Öffnung (I) zum Einführen des zu behandelnden Materials senkrecht zum hinteren Loch, wiederum im wesentlich zylindrischen hinteren Teil des mittigen Körpers (CC), eingestellt wird.

10. Die Vorrichtung nach Anspruch 7, **dadurch gekennzeichnet, dass** die Abstützung (13A) für die Laufbuchsen (13) zur Führung der Kolben (10), die ortsfest auf dem konischen Vorderteil des mittigen Körpers (CC) montiert ist, so eingestellt ist, dass die Kolben (10) senkrecht zur konischen Oberfläche und nicht senkrecht zur Achse der Einzugsschnecke (CO) sind, oder aber die Abstützung (13A) ist so eingestellt, dass die Kolben (10) senkrecht zur Achse der Einzugsschnecke (CO) sind.

11. Die Vorrichtung nach einem der vorhergehenden Ansprüche, **dadurch gekennzeichnet, dass** sie ferner ein Drucklager (17) und ein Verriegelungselement (18) umfasst, und dadurch, dass sich, am freien Ende des Vorderteils des mittigen Körpers (CC) ein Hopper-Stopfen (6) befindet, der einen Sitz für eine Öldichtung (16), einen Sitz für das Drucklager (17), sowie ein mittiges Loch für den Durchgang einer Welle (AC) der Einzugsschnecke (CO) aufweist; folglich wird erreicht, dass, durch radiales Greifen auf der Welle (AC) der Einzugsschnecke am Verriegelungselement (18), das direkt auf dem Drucklager (17) ruht, sich die Welle (AC) - die auf der Einzugswelle (CO) fixiert ist - in Bezug auf den mittigen Körper (CC) frei drehen kann und gleichzeitig axial in einer voreingestellten Position blockiert wird, sodass die Einzugsschnecke CO) während des Quetschzyklus des zu behandelnden organischen Materials nicht zurückweichen kann; wobei das Verriegelungselement (18) auf der Welle (AC) der Einzugsschnecke (CO) mittels einer ringförmigen Nut (51) fixiert ist, die in der Welle selbst der Einzugswelle bereitgestellt ist; somit erreichend, dass der von der Einzugsschnecke (CO) innerhalb des mittigen Körpers (CC) während der Behandlung des organische Materials und/oder der Nahrungsmittel erzeugte Druck, dank des Verriegelungsrings (18) auf der Welle (AC) der Einzugsschnecke selbst, direkt auf das Drucklager entlastet wird.

12. Die Vorrichtung nach einem der vorhergehenden Ansprüche, **dadurch gekennzeichnet, dass** sie Mittel zur Kühlung des behandelten Materials umfasst, die ihrerseits eine Kühleinheit (UR) mit einem Verdampfer umfassen, der innerhalb des Faches untergebracht ist, das die Schublade (CA) aufnimmt; die Letztere ist konzipiert entlang ihrer Längsachse über ihre ganze Länge bewegt zu werden oder völlig ausziehbar zu sein.

13. Die Vorrichtung nach Anspruch 1, **dadurch gekennzeichnet, dass** sie einen Mechanismus zum Erkennen von Verstopfung der Einzugsschnecke (CO) auf der Basis der Messung von Aufnahmestrom umfasst, wobei der Mechanismus mit der Motoruntersetzung (MR) zur Erkennung deren Drehung assoziiert ist, Stromaufnahme ändert sich ihrerseits erheblich und folglich wird, dank einer zweckdienlich bereitgestellten Elektronikkarte, welche die ganze Vorrichtung steuert, die Versorgung der Motoruntersetzung unterbrochen; es ist möglich, die Verstopfung der Einzugsschnecke (CO) über die elektronische Steuerplatine automatisch zu beseitigen, die, nach Erkennen der Verstopfung der Einzugsschnecke, auf die Drehung der Motoruntersetzung einwirkt, indem sie die Drehrichtung für eine voreingestellte Zeit umkehrt, wonach sie die Versorgung zur Motoruntersetzung selbst unterbricht, um technische Intervention zur Lösung des Problems zu ermöglichen; wobei eine Warnlampe und/oder akustische Warnvorrichtung bereitgestellt ist, die von der elektronischen Steuerplatine aktiviert wird, konzipiert den Benutzer zu warnen, dass die Einzugsschnecke blockiert ist und, dass es notwendig ist, den Gegenstand zu entfernen, der die Verstopfung der Einzugsschnecke selbst verursacht hat.

14. Die Vorrichtung nach einem der vorhergehenden Ansprüche, **dadurch gekennzeichnet, dass** die Mittel, die konzipiert sind, die Vorrichtung anzutreiben ein elektrisches Verdrahtungssystem sowie Drucktasten, Warnlampen und akustische Warneinrichtungen umfassen, die vorzugsweise an der äußeren vorderen Wand des elektrischen Haushaltsgeräts gesetzt sind, unter denen:
- ein Hauptschalter für EIN/AUS;
- Ein Schalter zum Starten des Verdichtungs- und Entwässerungsyzklus;
- ein Schalter zum Starten des ergänzenden Spülzyklus;
- Grüne/rote Warnlampen der Kühleinheit;
- "Service" Warnlampe;
- "Schublade voll" Warnlampe.

15. Die Vorrichtung nach Anspruch 14, **dadurch gekennzeichnet, dass** sich die Drucktasten und/oder Schalter und/oder Warnlampen und/oder akustischen Warnvorrichtungen auf einer Steuertafel befinden, die in einer Entfernung gesetzt ist, um bequeme Aktivierung der Vorrichtung zu ermöglichen, ohne die Tür des Küchenspülbeckens öffnen zu müssen.

16. Die Vorrichtung nach einem der vorhergehenden Ansprüche, **dadurch gekennzeichnet, dass** an der Öffnung (I) zur Einführung des Materials ein ortsfester Deckel bereitgestellt ist, der die Öffnung (I) selbst bedeckt, wenn sich die Vorrichtung in der geschlossenen Konfiguration für Gebrauch befindet; wobei die Vorrichtung offen ist, d. h., entlang der lateralen Führungen der tragenden Chassis, nur zur Einführung des zu behandelnden organischen Materials und/oder der Nahrungsmittelabfälle, verschoben wird.

## Revendications

1. Appareil de compactage et de déshydratation de déchets organiques et/ou de déchets alimentaires, comprenant :
- une ouverture (I) pour charger/introduire la matière organique et/ou les déchets alimentaires dans l'appareil lui-même ;
- des moyens mécaniques pour compacter et déshydrater ladite matière organique et/ou les déchets alimentaires, comprenant un corps de compactage central (CC) conçu pour séparer la matière à traiter de la fraction liquide qui y est contenue, lesdits moyens mécaniques de compactage et de déshydratation de ladite matière organique et/ou des déchets alimentaires comprenant une mèche (CO) conçue pour acheminer et simultanément comprimer et déshydrater la matière organique introduite par l'utilisateur dans ledit corps central (CC) via ladite ouverture de chargement (I), ladite compression se faisant par l'action mécanique de la mèche (CO) et les liquides organiques séparés se déchargent via une pluralité de trous (50) qui sont réglés longitudinalement ou radialement dans le sens des aiguilles d'une montre ou dans le sens inverse des aiguilles d'une montre appliqués à dessein sur la surface latérale du carter externe de la mèche (CO) ;
- des moyens pour recueillir et décharger la fraction de liquide provenant de la matière traitée, comprenant :
des moyens (14-15) pour recueillir sous l'effet de la pesanteur lesdits liquides organiques, lesdits moyens étant positionnés en dessous de ladite mèche (CO) ; des moyens (TU) pour acheminer lesdits liquides organiques à un tuyau de décharge dans les égouts ; un réducteur de moteur (MR) conçu pour être raccordé à la mèche (CO) ; ladite ouverture (I)
pour charger la matière à traiter étant située sur la partie supérieure de la mèche (CO) ;
- un tiroir (CA) monté en dessous dudit corps de compactage central (CC) pour recueillir les déchets alimentaires compactés et déshydratés via ledit corps central (CC) et pour recevoir par introduction manuelle les déchets non compactables, ledit appareil étant **caractérisé en ce que** :
- les trous ménagés sur la surface du carter externe de la mèche se présentent sous la forme de fentes ; ledit appareil comprenant en outre :
- un espaceur télescopique (D) ménagé sur ladite ouverture (I) pour faciliter l'installation dudit appareil, quelle que soit la hauteur du trou de drainage d'un évier par rapport à ladite ouverture (I) dudit appareil ; et
- un robinet-vanne (V) disposé sur ladite ouverture (I) et comprenant une partie coulissante pour dériver ledit appareil dans le cas où ledit évier doit décharger uniquement de l'eau et pour permettre la décharge dudit évier dans ledit appareil uniquement lorsque les déchets organiques et/ou les déchets alimentaires à traiter doivent être déchargés ;
le tiroir (CA) est équipé d'une structure conçue pour loger un sac pour recueillir les déchets alimentaires compactés et déshydratés (compost) qui chutent sous l'effet de la pesanteur d'un conduit avant (52) du corps central (CC) ;
dans lequel le tiroir (CA) est constitué d'une base porteuse de charge en forme de boîte (22) sur laquelle sont vissés les guides de coulisse (25) et une crémaillère pourvue de parois perforées, dans lequel la crémaillère a un fond (23) qui peut être aisément retiré pour un nettoyage éventuel, et deux protubérances conçues pour coopérer avec deux ressorts de support (26), fixés à la base porteuse de charge (22) du tiroir (CA) de sorte que ledit fond soit oscillant et légèrement incliné, où, avec l'augmentation de poids des déchets déshydratés, ledit fond incliné oscillant (23) a tendance à descendre jusqu'à ce que, une fois qu'une position de fin de course prédéterminée a été atteinte, il active un capteur qui indiquera la nécessité de remplacer le sac collecteur.

2. Appareil selon la revendication 1, **caractérisé en ce que** lesdits moyens pour recueillir les liquides organiques sont constitués d'une chemise définie par au moins un plateau collecteur avec une partie avant tronconique (14) et une partie arrière cylindrique (15), tandis que lesdits moyens d'acheminement desdits liquides organiques dans les égouts sont constitués par un tube (TU) prévu à cet effet pour la sortie de liquides et qui est conçu pour être raccordé à une pompe d'extraction (28).

3. Appareil selon l'une quelconque des revendications précédentes, **caractérisé en ce que** la crémaillère pourvue de parois perforées peut être un élément monobloc ou autrement être constituée de deux ou quatre parois composables, à savoir des parois latérales (19), une paroi arrière (20) et une paroi avant (21) pour faciliter les opérations de nettoyage.

4. Appareil selon l'une quelconque des revendications précédentes, **caractérisé en ce que** ledit robinet-vanne (V) a une sortie de décharge latérale située au-dessus de la partie coulissante de ladite vanne (V), qui a pour but de permettre une décharge directe des liquides du trou de décharge dudit évier dans les égouts.

5. Appareil selon l'une quelconque des revendications précédentes, **caractérisé en ce que** la mèche (CO) est une mèche à pas variable et/ou est constituée d'une mèche à départs multiples ou autrement **en ce que** la mèche (CO) a une forme externe hélicoïdale, dont la hauteur et le pas diminuent de l'extrémité arrière pour l'entrée de la matière à traiter à l'extrémité avant pour la sortie de la matière traitée.

6. Appareil selon l'une quelconque des revendications 1 et 2, **caractérisé en ce que** la mèche (CO) a une forme - d'une crête à l'autre - qui est concave de manière à permettre à des pistons racleurs (10) d'être accompagnés vers le haut même lorsque ladite mèche (CO) change de sens de rotation dans le cas d'une obturation ou d'un coincement.

7. Appareil selon l'une quelconque des revendications précédentes, **caractérisé en ce que** la mèche (CO) est autonettoyante et est équipée à cet effet d'un ou plusieurs pistons racleurs (10) logés dans une chemise en forme de coupe (13), qui sont poussés vers la mèche (CO) par des ressorts (11) prévus à cet effet et qui sont bloqués par des obturateurs filetés correspondants (12) qui sont positionnés coaxialement aux ressorts respectifs ; lesdits obturateurs filetés (12) étant conçus également de manière à ajuster la précharge du ressort respectif; dans lequel les chemises en forme de coupe (13) fonctionnent comme guide pour les pistons racleurs (10) et sont à cet effet solidement ancrées sur la partie conique avant du corps central (CC) via un support prévu à cet effet (13A).

8. Appareil selon la revendication 7, **caractérisé en ce que** le mouvement de montée des pistons (10) lui est transféré par la rotation de la mèche (CO) elle-même, tandis que le mouvement de descente est transféré par les ressorts de rappel (11) logés dans la coupe respective (13).

9. Appareil selon la revendication 1, **caractérisé en ce que** ladite mèche est logée dans un carter tronconique équipé d'une pluralité de fentes autonettoyantes (50) pour permettre aux liquides de la matière organique « pressée » de s'écouler dans la chemise de collecte constituée par le plateau collecteur (14-15), dans lequel ledit carter tronconique a un gros trou arrière axial (G) dans lequel la mèche (CO) est insérée, tandis que ladite ouverture supérieure (I) pour introduire la matière à traiter est réglée perpendiculairement audit trou arrière, une fois encore dans la partie arrière sensiblement cylindrique du corps central (CC).

10. Appareil selon la revendication 7, **caractérisé en ce que** le support (13A) pour les chemises (13) pour guider les pistons (10), qui est monté de manière fixe dans la partie conique avant du corps central (CC), est réglé de sorte que les pistons (10) soient perpendiculaires à la surface conique et non perpendiculaires à l'axe de la mèche (CO) ou autrement ledit support (13A) est réglé de sorte que les pistons (10) soient perpendiculaires à l'axe de la mèche (CO).

11. Appareil selon l'une quelconque des revendications précédentes, **caractérisé en ce qu'**il comprend en outre un palier de butée (17) et un élément de verrouillage (18) et **en ce que**, à l'extrémité libre de la partie avant du corps central (CC), il y a un obturateur de trémie (6), qui a un siège pour un joint étanche à l'huile (16), un siège pour ledit palier de butée (17) ainsi qu'un trou central pour le passage d'un arbre (AC) de la mèche (CO) ; obtenant ainsi le fait que, par saisie radiale sur l'arbre (AC) de la mèche sur ledit élément de verrouillage (18) reposant directement sur le palier de butée (17), ledit arbre (AC) - qui est fixé à la mèche (CO) - puisse librement tourner par rapport au corps central (CC) et, en même temps, soit bloqué axialement dans une position préétablie de sorte que la mèche (CO) ne puisse descendre au cours du cycle de pression de la matière organique à traiter ; dans lequel l'élément de verrouillage (18) est fixé sur l'arbre (AC) de la mèche (CO) au moyen d'une rainure annulaire (51) ménagée dans l'arbre lui-même de la mèche ; en obtenant ainsi le fait que la poussée axiale générée par la mèche (CO) dans le corps central (CC) au cours du traitement de la matière organique et/ou des déchets alimentaires soit déchargée directement sur le palier de butée logé dans l'obturateur de trémie (6) grâce audit anneau de verrouillage (18) sur l'arbre (AC) de la mèche elle-même.

12. Appareil selon l'une quelconque des revendications précédentes, **caractérisé en ce qu'**il comprend des moyens pour réfrigérer la matière traitée, lesquels moyens comprennent à leur tour une unité de réfrigération (UR) avec un évaporateur logé dans le compartiment qui loge le tiroir (CA) ; ce dernier étant conçu pour être déplacé le long de son axe longitudinal sur sa toute sa longueur ou étant totalement extractible.

13. Appareil selon la revendication 1, **caractérisé en ce qu'**il comprend un mécanisme pour détecter un coincement de la mèche (CO) sur la base de la mesure du courant d'absorption, ledit mécanisme étant associé au réducteur de moteur (MR) pour détecter la rotation de celui-ci : lorsque la mèche est coincée, l'absorption du courant change à son tour considérablement et, par suite, grâce à une carte électronique utilisée à cette fin, qui commande l'appareil entier, l'alimentation du réducteur de moteur est interrompue ; en permettant ainsi de décoincer ladite mèche (CO) automatiquement via la carte de commande électronique qui, ayant détecté un coincement de la mèche, agit sur la rotation du réducteur de moteur en inversant le sens de rotation pendant une période de temps préétablie, après quoi elle interrompt l'alimentation du réducteur de moteur lui-même afin de permettre une intervention technique pour résoudre le problème ; dans lequel il est prévu une lumière d'avertissement et/ou un dispositif d'avertissement acoustique activé(e) par la carte de commande électronique et conçue pour avertir l'utilisateur que la mèche est bloquée et qu'il est nécessaire de retirer l'objet qui a provoqué le coincement de la mèche elle-même.

14. Appareil selon l'une quelconque des revendications précédentes, **caractérisé en ce que** les moyens conçus pour entraîner l'appareil comprennent un système de câblage électrique, ainsi que des boutons poussoirs, des lumières d'avertissement et des dispositifs d'avertissement acoustiques qui sont montés de préférence sur la paroi arrière de l'appareil ménager électrique, entre autres :
- un commutateur marche/arrêt principal ;
- un commutateur pour démarrer le cycle de compactage et de déshydratation ;
- un commutateur pour démarrer le cycle de rinçage supplémentaire ;
- une lumière d'avertissement verte/rouge de l'unité de réfrigération ;
- une lumière d'avertissement de « service » ;
- une lumière d'avertissement « tiroir plein ».

15. Appareil selon la revendication 14, **caractérisé en ce que** lesdits boutons poussoirs et/ou lesdits commutateurs et/ou lesdites lumières d'avertissement et/ou lesdits dispositifs d'avertissement acoustiques sont situés sur un panneau de commande monté à une distance qui permette l'activation commode de l'appareil sans devoir ouvrir la porte du meuble d'évier.

16. Appareil selon l'une quelconque des revendications précédentes, **caractérisé en ce qu'**il est prévu sur l'ouverture (I) pour l'introduction de matière un couvercle fixe qui recouvre l'ouverture (I) elle-même lorsque l'appareil est en configuration fermée pour utilisation ; ledit appareil étant ouvert, c'est-à-dire, déplacé le long des guides latéraux du châssis porteur de charge uniquement pour introduire la matière organique et/ou les déchets alimentaires à traiter.
